Europäisches Patentamt

European Patent Office

Office européen des brevets

(19)

(11) Numéro de publication : **0 094 855**
**B1**

(12) # FASCICULE DE BREVET EUROPÉEN

(45) Date de publication du fascicule du brevet :
**18.06.86**

(51) Int. Cl.⁴ : **B 62 D 61/02**, B 60 G 21/04

(21) Numéro de dépôt : **83400840.1**

(22) Date de dépôt : **27.04.83**

(54) Véhicule à quatre roues.

(30) Priorité : **12.05.82 FR 8208217**

(43) Date de publication de la demande :
**23.11.83 Bulletin 83/47**

(45) Mention de la délivrance du brevet :
**18.06.86 Bulletin 86/25**

(84) Etats contractants désignés :
**AT BE CH DE GB IT LI LU NL SE**

(56) Documents cités :
**DE-A- 2 347 952**
**DE-C-   854 757**
**FR-A-   547 268**
**FR-A- 1 207 435**
**FR-A- 1 396 383**
**FR-A- 2 467 133**
**US-A- 1 938 972**
**US-A- 3 236 323**

(73) Titulaire : **M.B.K. Industrie Société Nouvelle Motobecane**
**Zone Industrielle de Rouvroy**
**F-02100 Saint Quentin (FR)**

(72) Inventeur : **Jaulmes, Christian**
**16, Impasse du Bureau**
**F-75011 Paris (FR)**

(74) Mandataire : **Maureau, Pierre et al**
**Cabinet GERMAIN, MAUREAU 64, rue d'Amsterdam**
**F-75009 Paris (FR)**

Jouve, 18, rue St-Denis, 75001 Paris, France

## Description

La présente invention concerne un véhicule à quatre roues destiné à être conduit comme un cyclomoteur, c'est-à-dire dont le châssis est constitué par un cadre, dont les quatre roues sont disposées en losange, avec une roue arrière motrice dont l'axe est porté par le cadre et une roue avant directrice dont l'axe est porté par une fourche guidée dans un tube du cadre et solidaire d'un guidon et qui sont toutes deux, comme le cadre, centrées par rapport au plan de symétrie longitudinal du véhicule, et deux roues latérales stabilisatrices.

On connaît, par le brevet US-A-1.938.972 un véhicule de ce type dans lequel les supports des roues stabilisatrices sont montés axialement mobiles dans des guides verticaux, leurs moyens d'entraînement étant liés au levier de frein à main de manière à ce que ces roues soient amenées en position basse active lorsque le levier de frein à main est manœuvré dans le sens du serrage du frein et inversement.

On connaît aussi par le brevet DE-A-2.347.952 un véhicule de ce type dans lequel les roues stabilisatrices sont portées par les branches latérales d'un étrier dont la branche centrale est articulée sur un axe horizontal fixe commun perpendiculaire au plan de symétrie du véhicule et solidaire du cadre.

Dans ces véhicules, soit les roues stabilisatrices sont escamotables lorsque le véhicule est en marche et n'ont pour rôle que d'assurer sa stabilité à l'arrêt, soit leur maintien au sol est asservi aux manœuvres du guidon, ce qui perturbe les conditions naturelles de l'équilibre dynamique du véhicule puisque rien n'est prévu pour tenir compte des débattements des roues stabilisatrices provoqués par les irrégularités du sol sur l'une ou l'autre ou les deux, en ligne droite ou en virage.

La présente invention vise à remédier à ces inconvénients. A cet effet, dans le véhicule qu'elle concerne et qui est du type précité, dans lequel les roues stabilisatrices sont portées par les branches latérales d'un étrier dont la branche centrale est articulée sur un axe horizontal fixe commun perpendiculaire au plan de symétrie du véhicule et solidaire du cadre, cette branche centrale porte un bras sensiblement radial dont l'extrémité libre est attelée à l'une des extrémités d'un palonnier dont le centre est articulé sur un axe secondaire perpendiculaire à l'axe commun et susceptible d'osciller autour de l'axe commun à l'encontre d'une force exercée sur lui par des moyens tendant à le faire basculer dans le sens correspondant à l'application des roues latérales sur le sol, des moyens étant prévus pour permettre de bloquer ou débloquer, à volonté, les étriers portant les roues latérales, dans la position qu'ils occupent.

Ce véhicule présente donc l'avantage de se conduire de la même manière que n'importe quel véhicule à deux roues motorisé, tel que cyclomoteurs, motocyclettes ou autres et de pouvoir être maintenu en position stable à l'arrêt sans qu'il soit nécessaire à l'utilisateur de poser au moins un pied par terre, en cas d'arrêt court, comme à un feu rouge ou d'avoir recours à une béquille s'il est en stationnement prolongé comme sur un parking. Cette disposition permet donc de carrosser le véhicule comme on le désire.

Suivant la forme d'exécution la plus simple de l'invention, les moyens de blocage des étriers portant les roues latérales sont constitués par des plaques repose-pieds fixées sur les étriers et sur lesquelles le conducteur peut exercer une pression suffisante pour obtenir le blocage des étriers.

Cependant, suivant une forme d'exécution préférée de l'invention, les moyens de blocage des étriers portant les roues latérales comprennent, en association avec chaque étrier, d'une part, une tige articulée, par l'une de ses extrémités, à l'étrier considéré et montée coulissante dans un organe de guidage assurant son maintien en position sensiblement verticale dirigée vers le haut et, d'autre part, une pince dont les mâchoires engagées en permanence sur la tige précitée, sont maintenues normalement en position d'ouverture par un ressort et dont la mâchoire mobile est reliée, par câble, à un organe commun de commande en position de serrage.

Cet organe de commande peut être une pédale ou une poignée montée sur le guidon du véhicule. Dans tous les cas, pour permettre le maintien de cet organe en position de serrage de la pince, ce qui, en l'absence de béquille, est nécessaire lorsque le véhicule est laissé en stationnement, à cet organe est associé, de manière connue, un cliquet de verrouillage.

Dans cette forme préférée d'exécution de l'invention, comme dans la plus simple, chaque étrier porteur d'une roue latérale peut supporter une plaque repose-pieds permettant au conducteur de participer au maintien des roues latérales en contact avec le sol. Cependant, il est aussi possible de prévoir un tablier repose-pieds interdisant au conducteur de perturber les débattements naturels des roues latérales.

Par ailleurs, pour satisfaire aux conditions de la réglementation, l'organe de commande, pédale ou poignée articulée, d'au moins l'un des freins avant ou arrière de ce véhicule est aussi équipé d'un cliquet de verrouillage fournissant à ce véhicule un frein de parking.

De toute façon, l'invention sera bien comprise à l'aide de la description qui suit, en référence aux dessins schématiques annexés représentant, à titre d'exemple non limitatif, une forme d'exécution de ce véhicule :

Figure 1 en est une vue en perspective ;

Figure 2 en est une vue partielle en perspective, montrant le mode de montage des roues latérales ;

Figures 3 à 7 sont des vues très schématiques en plan par-dessus illustrant le fonctionnement des roues latérales stabilisatrices.

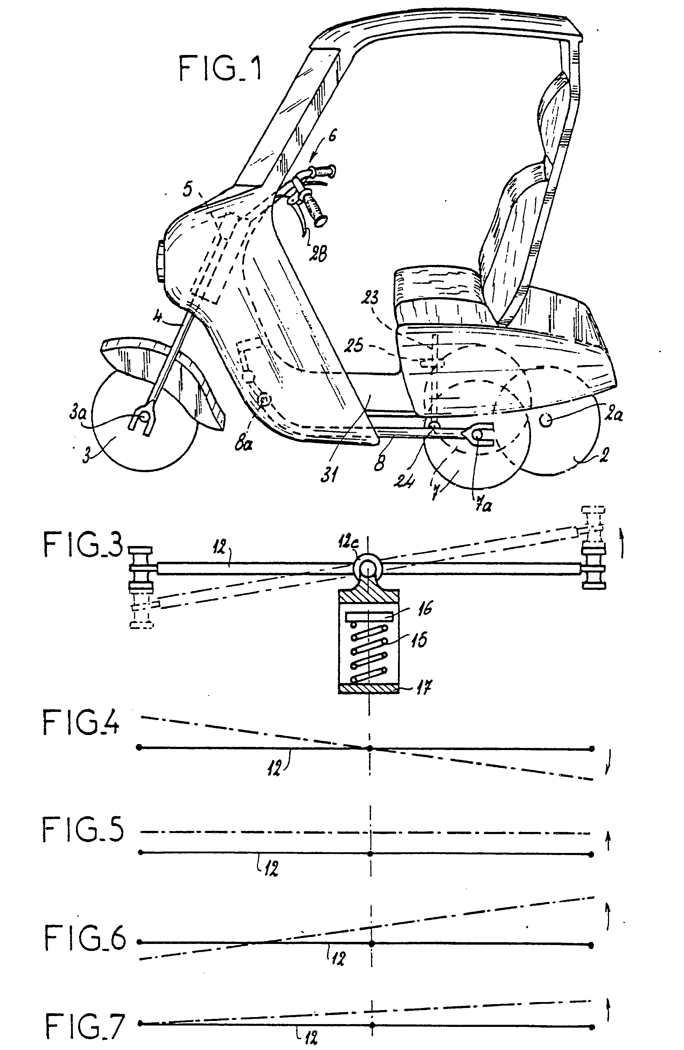

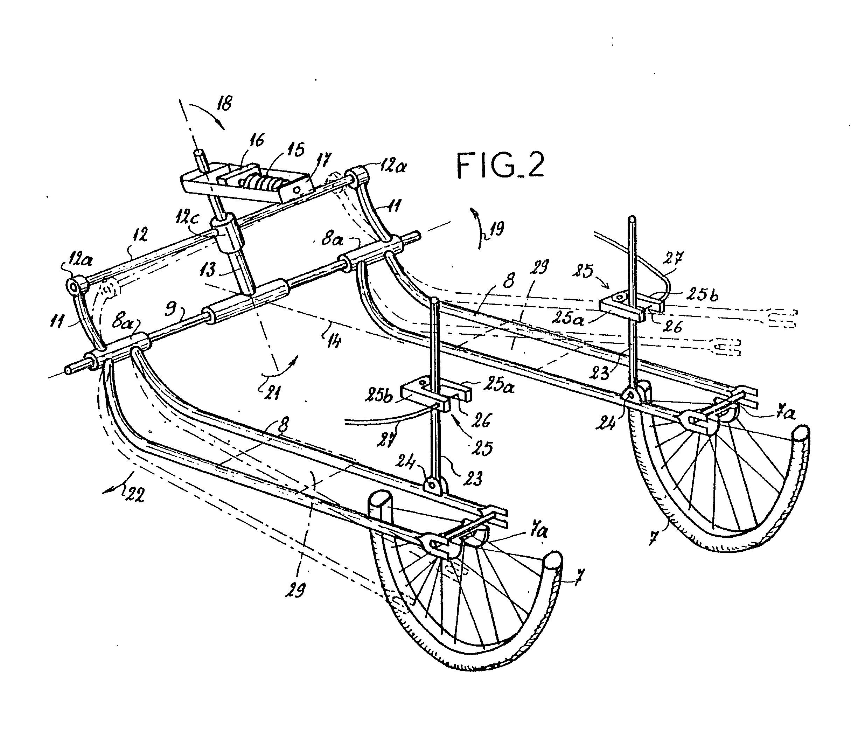

Comme le montre notamment la figure 1, ce véhicule est du type dont le châssis est constitué par un cadre, non visible sur le dessin, et il est équipé de quatre roues disposées en losange, à savoir une roue arrière motrice (2), une roue avant directrice (3) et deux roues latérales stabilisatrices (7). L'axe (2a) de la roue arrière motrice (2) est porté par le cadre tandis que l'axe (3a) de la roue avant (3) est porté par une fourche (4) guidée dans le tube (5) du cadre et solidaire d'un guidon (6). Ces deux roues arrière (2) et avant (3) sont centrées par rapport au plan de symétrie du véhicule. L'axe (7a) de chaque roue stabilisatrice (7) est porté par un étrier (8) dont la branche centrale (8a) est articulée sur un axe horizontal fixe (9) perpendiculaire au plan de symétrie du véhicule et porté par le cadre de ce dernier. Cet axe (9) est commun aux deux étriers (8) des deux roues latérales (7). Chaque branche centrale (8a) d'un étrier (8) porte un bras sensiblement radial (11) articulé à l'une des extrémités (12a) d'un palonnier (12) dont le centre (12c) est articulé sur un axe secondaire (13) perpendiculaire à l'axe principal (9) précité et qui, de ce fait, est logé dans le plan de symétrie du véhicule représenté sur la figure 2 par l'axe (13) et la ligne (14). Cet axe secondaire (13) est monté oscillant autour de l'axe commun (9). Un ressort (15) comprimé entre une plaque d'appui (16) solidaire du cadre du véhicule et un collier (17) solidaire de l'axe d'articulation (13) du palonnier (12) tend à faire pivoter cet axe (13) et, par conséquent, le point central (12c) du palonnier (12) dans le sens de la flèche (18).

Il faut noter que les articulations entre chaque bras (11) d'un étrier (8) et l'extrémité correspondante (12a) et le palonnier (12) d'une part et entre le point central (12c) du palonnier (12) et l'axe oscillant (13) d'autre part, sont des articulations souples autorisant des rotations secondaires, c'est-à-dire dont les paliers autorisent un certain débattement angulaire.

On conçoit que, dans ces conditions, l'action du ressort (15) sur l'axe oscillant (13), par conséquent sur le palonnier (12), ait pour effet de tendre à maintenir les roues latérales (7) appliquées sur le sol, puisque le pivotement de l'axe oscillant (13), dans le sens de la flèche (18), se traduit par un pivotement des bras (11) et des étriers (8) dans le même sens autour de l'axe commun (9).

La présence des roues latérales (7), qui sont donc normalement maintenues en contact avec le sol par suite de l'action du ressort (15), n'a pourtant pas pour effet de perturber la conduite du véhicule, notamment dans les virages, comme cela ressort de l'examen de la figure 2.

En effet, lorsque le véhicule tourne d'un côté, par exemple à droite, il adopte une position inclinée à l'intérieur du virage, ce qui a pour effet de tendre à enfoncer dans le sol la roue latérale (7) correspondante. La réaction du sol sur cette roue latérale (7) provoque son soulèvement par rapport au véhicule et, par conséquent, le pivotement de l'étrier (8) correspondant, dans le sens de la flèche (19) autour de l'axe commun (9), comme illustré en traits interrompus sur la figure 2. Le pivotement correspondant du bras (11) solidaire de l'étrier (8) de droite, tend à faire pivoter le palonnier (12) dans le sens de la flèche (21) autour de l'axe secondaire (13), sans que rien ne s'oppose à ce pivotement, puisque dans le même temps, la roue latérale (7) de gauche a tendance à être soulevée du sol par suite de l'inclinaison du véhicule sur la droite. L'axe secondaire (13) n'a donc pas tendance à osciller et le pivotement précité du palonnier (12) a donc pour effet de faire pivoter l'étrier (8) supportant la roue latérale (7) de gauche autour de l'axe commun (9) dans le sens de la flèche (22), c'est-à-dire dans le sens opposé à celui de la flèche (19), comme illustré en traits interrompus sur cette figure.

On voit que le montage des roues latérales (7) assure leur maintien en contact avec le sol aussi bien lorsque le véhicule est en ligne droite que lorsqu'il décrit des courbes en position inclinée.

Il a été indiqué précédemment que le ressort (15) avait pour rôle d'assurer le maintien des roues latérales (7) en contact avec le sol, mais il a aussi pour rôle celui d'un organe de suspension en autorisant l'absorption des irrégularités du sol.

En effet, lorsqu'une seule roue latérale (7) est soulevée par une irrégularité du sol, alors que le véhicule se déplace en ligne droite, c'est-à-dire sans qu'il adopte une position inclinée autorisant une compensation du soulèvement d'une roue latérale (7) par l'enfoncement de l'autre, l'écrasement du ressort (15) autorise un pivotement du palonnier (12) autour de son extrémité (12a) opposée à celle située du même côté que la roue latérale (7) soulevée.

Dans le cas où les deux roues latérales (7) seraient soulevées simultanément par une irrégularité du sol, l'écrasement du ressort (15) autoriserait le pivotement du palonnier (12) et de son axe secondaire (13) autour de l'axe commun (9), dans le sens opposé à la flèche (18), permettant ainsi l'absorption de cette irrégularité sans perturbation de la ligne de conduite du véhicule.

Les figures 3 à 7 illustrent d'ailleurs le comportement du palonnier (12) en fonction des conditions dans lesquelles se trouve le véhicule.

Comme indiqué précédemment, la figure 2 montre, en traits mixtes, le comportement du palonnier (12) et des étriers (8) lors d'un virage à droite. La figure 3 montre le comportement du palonnier (12) également lors d'un virage à droite de ce véhicule. La figure 4 illustre de la même manière que la figure 3, un virage à gauche. La figure 5 illustre l'effet de suspension joué par le ressort (15) lorsque le véhicule se déplace en ligne droite. La figure 6 illustre l'effet de suspension sur les deux roues latérales (7) s'ajoutant à l'effet d'un virage à droite. Et, enfin, la figure 7 illustre l'effet de suspension lorsque seule la roue droite passe sur un obstacle alors que le véhicule se déplace en ligne droite.

Il a été indiqué précédemment que la présence des roues latérales (7) ne gênait en rien la conduite du véhicule, mais on conçoit aisément que, pour que leur présence soit justifiée, il est nécessaire qu'elles puissent contribuer à la stabilité du véhicule lorsque celui-ci est à l'arrêt, que cet arrêt soit momentané comme à un feu rouge ou prolongé comme sur un parking. Pour cela, il est indispensable que soient prévus des moyens de blocage des étriers (8) dans la position qu'ils occupent au moment de cet arrêt. Dans l'exemple illustré sur le dessin et plus particulièrement sur la figure 2, ces moyens comprennent une tige (23) articulée par une de ses extrémités sur l'une des branches latérales de l'étrier (8) considéré, à l'aide d'un axe transversal (24) et normalement maintenu sensiblement verticalement dirigé vers le haut par un organe de guidage (25) porté par le cadre du véhicule et agencé pour jouer aussi le rôle de moyen de blocage. A cet effet, cet organe (25) comprend une mâchoire fixe (25a) et une mâchoire mobile (25b), toutes deux engagées sur la tige (23), normalement maintenues par un ressort, non visible sur le dessin, en position ouverte, c'est-à-dire de déblocage dans laquelle la tige (23) peut librement coulisser axialement et qui peut être amenée en position de serrage à l'aide d'un câble (26) guidé dans une gaine (27) et susceptible d'agir sur la mâchoire mobile (25a) pour assurer le blocage de la tige (23) et cela interdit tout déplacement axial.

Il suffit que le câble (26) soit relié à un organe de manœuvre tel qu'une poignée articulée (28) montée sur le guidon (6) du véhicule contrôlant simultanément les deux organes de blocage (25) des deux tiges (23), pour permettre le maintien du véhicule en position stable, même à l'arrêt. Pour que ce maintien soit assuré même lorsque le conducteur quitte son véhicule, et sans qu'il soit nécessaire d'avoir recours à une béquille, il suffit d'équiper, d'une manière connue en soi, la poignée articulée de commande (28) d'un cliquet de verrouillage en position de blocage des organes de blocage (25).

Ce type de véhicule est généralement équipé de deux freins, l'un avant agissant sur la roue avant, et l'autre arrière agissant sur la roue arrière. Il est avantageux de prévoir, comme cela est d'ailleurs prévu sur certains véhicules motorisés à deux roues comme les motocyclettes, que le frein avant soit commandé par un levier articulé monté sur le côté droit du guidon, et que le frein arrière soit commandé par une pédale accessible au pied droit du conducteur, ce qui permet de monter la poignée (28) de commande du blocage des roues latérales (7) sur le côté gauche du guidon (6), c'est-à-dire à l'emplacement habituel de la commande de débrayage d'une motocyclette. Cette disposition présente donc l'avantage de ne pas modifier les réflexes du conducteur puisque le blocage des roues latérales (7) doit être commandé au même moment que le débrayage d'un véhicule qui en serait équipé.

Il a été indiqué précédemment que le verrouillage du blocage des roues latérales (7) avait pour but d'éviter la nécessité de prévoir une béquille pour le maintien stable de ce véhicule en position de parking. Dans ce cas, puisque la réglementation l'exige, l'organe de commande d'au moins l'un des deux freins avant et arrière est lui aussi équipé d'un cliquet de verrouillage permettant d'utiliser ce frein comme frein de parking.

La présence des roues latérales (7) et de leur possibilité de blocage autorise donc la mise en place, sur ce véhicule, d'une carrosserie telle que celle représentée sur la figure 1, qui suffit pour mettre le conducteur à l'abri des intempéries et rend donc l'utilisation de ce véhicule beaucoup plus confortable que celle des autres véhicules de ce type. En effet, les possibilités de maintien en équilibre stable de ce véhicule, même lorsqu'il est à l'arrêt momentanément, permettent de prévoir une carrosserie beaucoup plus enveloppante, puisque le conducteur n'est plus obligé d'assurer le maintien de la stabilité de son véhicule à l'arrêt en posant au moins un pied par terre.

Il est possible de prévoir une plaque repose-pieds (29) portée par les branches latérales de chaque étrier (8) et autorisant le conducteur du véhicule à participer au maintien des roues latérales (7) en contact avec le sol ; ces plaques repose-pieds (29) sont représentées en traits mixtes sur la figure 2.

Cependant, comme illustré sur la figure 1, de préférence, il est prévu un tablier repose-pieds (31) interdisant au conducteur de perturber les débattements naturels des roues latérales (7).

Comme il va de soi et comme il ressort de ce qui précède, l'invention ne se limite pas à la seule forme d'exécution de ce véhicule qui a été décrite ci-dessus à titre d'exemple non limitatif ; elle en embrasse, au contraire, toutes les variantes de réalisation.

**Revendications**

1. Véhicule à quatre roues destiné à être conduit comme un cyclomoteur ou similaire, du type dont le châssis est constitué par un cadre, dont les quatre roues sont disposées en losange, avec une roue arrière motrice (2) dont l'axe (2a) est porté par le cadre, une roue avant directrice (3) dont l'axe (3a) est porté par une fourche (4) guidée dans un tube (5) du cadre et solidaire d'un guidon (6) et qui sont toutes deux, comme le cadre, centrées par rapport au plan de symétrie longitudinal (14) du véhicule et deux roues latérales stabilisatrices (7), les roues stabilisatrices (7) étant portées par les branches latérales d'un étrier (8) dont la branche centrale (8a) est articulée sur un axe horizontal fixe commun (9) perpendiculaire audit plan de symétrie (14) du véhicule et solidaire du cadre, caractérisé en ce que cette branche centrale (8a) porte un bras sensiblement radial (11) dont l'extrémité libre est attelée à l'une des extrémités (12a) d'un palonnier (12) dont le centre est articulé sur un axe secondaire (13) perpendiculaire à l'axe commun (9) et susceptible d'osciller autour de l'axe commun (9) à l'encontre d'une force exercée sur lui par des moyens tendant à le faire basculer dans le sens (18) correspondant à l'application des roues latérales (7) sur le sol, des moyens étant prévus pour permettre de bloquer ou débloquer, à volonté, les étriers (8) portant les roues latérales (7), dans la position qu'ils occupent.

2. Véhicule à quatre roues selon la revendication 1, caractérisé en ce que les moyens de blocage des étriers (8) portant les roues latérales (7) sont constitués par des plaques repose-pieds (29) fixées sur les étriers (8) et sur lesquelles le conducteur peut exercer une pression suffisante pour obtenir le blocage des étriers (8).

3. Véhicule selon la revendication 1 ou la revendication 2, caractérisé en ce que les moyens de blocage des étriers (8) portant les roues latérales (7) comprennent en association avec chaque étrier, d'une part, une tige (23) articulée, par l'une de ses extrémités, à l'étrier (8) considéré et montée coulissante dans un organe de guidage (25) assurant son maintien en position sensiblement verticale dirigée vers le haut et, d'autre part, une pince dont les mâchoires (25a, 25b) engagées en permanence sur la tige (23) précitée, sont maintenues normalement en position d'ouverture par un ressort et dont la mâchoire mobile (25a) est reliée, par câble (26), à un organe commun de commande en position de serrage.

4. Véhicule selon la revendication 3, caractérisé en ce que l'organe de commande des moyens de blocage des étriers (8) portant les roues latérales (7) est constitué par une poignée (28) montée sur le guidon (6).

5. Véhicule selon la revendication 3, caractérisé en ce que l'organe de commande des moyens de blocage des étriers (8) portant les roues latérales (7) est constitué par une pédale.

6. Véhicule selon la revendication 4 ou la revendication 5, caractérisé en ce qu'à l'organe de commande des moyens de blocage des étriers (8) portant les roues latérales (7), est associé, de manière connue, un cliquet de verrouillage.

7. Véhicule selon l'une quelconque des revendications précédentes, caractérisé en ce que l'organe de commande, pédale ou poignée articulée, d'au moins l'un des freins avant ou arrière de ce véhicule, est aussi équipé d'un cliquet de verrouillage fournissant à ce véhicule un frein de parking.

8. Véhicule selon l'une quelconque des revendications 1 et 3 à 6, caractérisé en ce qu'il est prévu un tablier repose-pieds (31) interdisant au conducteur de perturber les débattements des étriers (8) portant les roues latérales (7).

**Claims**

1. A vehicle with four wheels intended to be driven like a moped or similar, of the type whose chassis is constituted by a frame whose four wheels are disposed in a diamond shape with a rear driving wheel (2) whose axle (2a) is carried by the frame, a steering front wheel (3) whose axle (3a) is carried by a fork (4) guided in a tube (5) of the frame and integral with a handlebar (6) and which are both, like the frame, centred in relation to the longitudinal plane of symmetry (14) of the vehicle and two lateral stabiliser wheels (7), the stabiliser wheels (7) being carried by the lateral members of a stirrup (8) whose central member (8a) is articulated on a common fixed horizontal axle (9) perpendicular to the said plane of symmetry (14) of the vehicle and integral with the frame, characterised in that this central member (8a) carries a substantially radial arm (11) whose free end is attached to one of the ends (12a) of a swing bar (12) whose centre is articulated on a secondary shaft (13) perpendicular to the common axle (9) and capable of oscillating around the common axle (9) against a force exerted thereon by means tending to cause it to rock in direction (18) corresponding to the application of the lateral wheels (7) on the ground, provision being made for means for allowing the stirrups (8) carrying the lateral wheels (7) to be locked or released at will in the position which they occupy.

2. A vehicle with four wheels according to Claim 1, characterised in that the means for locking stirrups (8) carrying the lateral wheel (7) are constituted by foot rest plates (29) fixed to stirrups (8) and whereon the driver can exert pressure sufficient to obtain the locking of stirrups (8).

3. A vehicle according to Claim 1 or Claim 2, characterised in that the means for locking stirrups (8) carrying the lateral wheels (7) comprise in association with each stirrup, on the one hand, a rod (23) articulated at one of its ends to the stirrup (8) considered and slidably mounted in a guide member (25) ensuring that it is maintained in a substantially vertical position directed upwards and on the other hand, a clamp whose jaws (25a, 25b) permanently engaged on the above mentioned rod (23), are normally kept in an open position by a spring and whose movable jaw (25a) is connected, via cable (26) to a common actuating member in a secured position.

4. A vehicle according to Claim 3, characterised in that the member for actuating the locking means of stirrups (8) carrying the lateral wheels (7) is constituted by a handle (28) mounted on handlebar (6).

5. A vehicle according to Claim 3, characterised in that the member for actuating the means for locking stirrups (8) carrying the lateral wheels (7) is constituted by a pedal.

6. A vehicle according to Claim 4 or Claim 5, characterised in that with the member actuating the means for locking stirrups (8) carrying lateral wheels (7), there is associated a locking catch in a known way.

7. A vehicle according to any one of the preceding Claims, characterised in that the actuating member, a pedal or articulated handle, for at least one of the front or rear brakes of this vehicle, is also fitted with a locking catch providing a parking brake for this vehicle.

8. A vehicle according to any one of Claims 1 and 3 to 6, characterised in that provision is made for a foot rest (31) preventing the driver from disturbing the deflections of stirrups (8) carrying the lateral wheels (7).

## Patentansprüche

1. Als · Moped oder dergleichen fahrbares Vierradfahrzeug, mit einem Rahmen als Fahrgestell, mit vier in Rautenform angeordneten Rädern, einem mit seiner Achse (21) an dem Rahmen angebrachten, angetriebenen Hinterrad (2), einem lenkbaren Vorderrad (3), dessen Achse (3a) von einer Gabel (4) gehalten wird, die in einem Rohr (5) des Rahmens geführt und mit einem Lenker (6) fest verbunden ist, wobei beide Räder ebenso wie der Rahmen bezüglich der Längssymmetrie-ebene (14) des Fahrzeugs zentriert sind, und mit zwei stabilisierenden seitlichen Stützrädern (7), die von den Seitenarmen eines Bügels (8) gehalten werden, dessen Mittelstück (8a) an eine festliegende gemeinsame Horizontalachse (9) angelenkt ist, die senkrecht zu der Symmetrieebene (14) des Fahrzeugs verläuft und mit dem Rahmen starr verbunden ist, dadurch gekennzeichnet, daß das Mittelstück (8a) einen praktisch radialen Arm (11) trägt, dessen freies Ende mit dem einen Ende (12a) eines Querträgers (12) gekoppelt ist, dessen Mitte an eine Sekundärachse (13) angelenkt ist, die senkrecht zu der gemeinsamen Achse (9) verläuft, und um die gemeinsame Achse (9) gegen die Wirkung einer Kraft zu pendeln vermag, die auf sie durch eine Einrichtung ausgeübt wird, die sie in der Richtung (18) zu kippen versucht, die dem Aufsetzen der Seitenräder (7) auf den Boden entspricht, wobei eine Einrichtung vorgesehen ist, die es ermöglicht, willkürlich die die Seitenräder (7) tragenden Bügel (8) in der von ihnen eingenommenen Stellung festzuklemmen oder die Klemmung zu lösen.

2. Vierradfahrzeug nach Anspruch 1, dadurch gekennzeichnet, daß die Einrichtung zum Festklemmen der die Seitenräder (7) tragenden Bügel (8) durch Fußabstützplatten (29) gebildet ist, die auf den Bügeln (8) befestigt sind und auf die der Fahrer einen so starken Druck ausüben kann, daß die Bügel (8) blockiert sind.

3. Vierradfahrzeug nach Anspruch 1 oder 2, dadurch gekennzeichnet, daß die Einrichtung zum Festklemmen der die Seitenräder (7) tragenden Bügel (8), zugeordnet zu jedem Bügel, einerseits eine Stange (23), die mit ihrem einen Ende an den betreffenden Bügel angelenkt und gleitend verschiebbar in einem Führungsorgan (25) ist, das für eine praktisch vertikal nach oben gerichtete Lage der Stange sorgt, und andererseits eine Zange aufweist, deren Klemmbacken (25a, 25b), die ständig an der Stange (23) anliegen, normalerweise durch eine Feder in Offenstellung gehalten werden und deren bewegliche Backe (25a) durch ein Kabel (26) mit einem gemeinsamen Betätigungsorgan für die Herbeiführung der Klemmstellung verbunden ist.

4. Vierradfahrzeug nach Anspruch 3, dadurch gekennzeichnet, daß das Betätigungsorgan für die Einrichtung zum Festklemmen der die Seitenräder (7) tragenden Bügel (8) aus einem an dem Lenker (6) angebrachten Handgriff (28) besteht.

5. Vierradfahrzeug nach Anspruch 3, dadurch gekennzeichnet, daß das Betätigungsorgan für die Einrichtung zum Festklemmen der die Seitenräder (7) tragenden Bügel (8) als Pedal ausgebildet ist.

6. Vierradfahrzeug nach Anspruch 4 oder 5, dadurch gekennzeichnet, daß das Betätigungsorgan zum Festklemmen der die Seitenräder (7) tragenden Bügel (8) in an sich bekannter Weise mit einer Sperrklinke versehen ist.

7. Vierradfahrzeug nach einem der vorhergehenden Ansprüche, dadurch gekennzeichnet, daß das als Pedal oder Gelenkhebel ausgebildete Betätigungsorgan für mindestens eine der vorn und hinten angebrachten Bremsen des Fahrzeugs außerdem mit einer Sperrklinke ausgestattet ist, die eine Feststellbremse für das Fahrzeug darstellt.

8. Vierradfahrzeug nach einem der Ansprüche 1 und 3 bis 6, dadurch gekennzeichnet, daß ein Fußbrett (31) vorgesehen ist, das es dem Fahrer unmöglich macht, die Auf- und Abbewegung der die Seitenräder (7) tragenden Bügel (8) zu stören.

**0 094 855**

FIG.1

FIG.3

FIG.4

FIG.5

FIG.6

FIG.7

FIG.2